# EUROPEAN PATENT APPLICATION

(11) **EP 4 714 806 A1**
(43) Date of publication of application: **25.03.2026**
(21) Application number: 24202198.8
(22) Date of filing: 24.09.2024
(51) Int. Cl.: B62D 37/00, B62D 61/00, B62D 61/12, B62D 7/15

(54) **AIR WHEEL CAR**

(71) Applicant: Lin, Po-Kang, Taipei 104 (TW)
(72) Inventor: Lin, Po-Kang, Taipei 104 (TW)
(74) Representative: Stevens Hewlett & Perkins

(57) **Abstract**

Provided is an air wheel car, including: a body, with a bottom having an accommodation space; at least one driving wheel, disposed in the accommodation space and pivotally connected to the body through a control shaft, and the accommodation space having a diameter greater than a diameter of at least one driving wheels; and a computer device, disposed inside the body, and electrically connected to the control shaft and at least one driving wheels, wherein the computer device controls at least one driving wheels to perform 1-90 degree steering through the control shaft.

## Description

### BACKGROUND OF THE INVENTION

### 1. Field of the Invention

The present invention relates generally to a car structure, and more particularly, to a car structure able to rotate the wheels to facilitate the car to move laterally.

### 2. The Prior Arts

In the existing car structure, most of the wheels of the car can only rotate in a small range. Therefore, when parking on the roadside, it takes a lot of time to adjust the angle of the tires to perform the reversing process. Furthermore, most current cars are two-wheel drive, and only the front wheels can rotate. This structure greatly limits the car's mobility.

On the other hand, although in the current technology, electromagnetic technology is applied to the wheel structure of the car, so that the car tires can rotate 360 degrees and move laterally. However, tires using electromagnetic technology must run on corresponding tracks and cannot drive freely on ordinary roads.

### SUMMARY OF THE INVENTION

A primary objective of the present invention is to provide a car structure with the capability to move laterally. Therefore, to address the shortcoming in conventional car structures, it is necessary to provide a completely new vehicle structure so that the vehicle can move laterally easily to drive on ordinary roads.

For achieving the foregoing objective, the present invention provides an air wheel car, comprising: a body, with a bottom having an accommodation space; at least one driving wheel, disposed in the accommodation space and pivotally connected to the body through a control shaft, and the accommodation space having a diameter greater than a diameter of at least one driving wheels; and a computer device, disposed inside the body, and electrically connected to the control shaft and at least one driving wheels, wherein the computer device controls at least one driving wheels to perform 1-90 degree steering through the control shaft.

Furthermore, the air wheel car of the present invention further includes an auxiliary wheel, the auxiliary wheel includes a ball wheel and a bearing, the ball wheel is coupled in the bearing, the bearing is connected to the bottom of the body through a connecting shaft, and the auxiliary wheel is arranged opposite to the driving wheel.

Furthermore, the air wheel car of the present invention further includes a plurality of auxiliary wheels, each of the auxiliary wheels includes a ball wheel and a bearing, the ball wheel is coupled in the bearing, the bearing is connected to the bottom of the body through a connecting shaft, and the auxiliary wheels are centered around the driving wheel and arranged opposite to one another.

Preferably, the number of the auxiliary wheels is four, and the four auxiliary wheels are respectively arranged at the four corners of the bottom of the body.

Furthermore, the air wheel car of the present invention further includes a fan device, disposed on the body opposite to the driving wheel and electrically connected to the computer device.

Furthermore, when the air wheel car of the present invention includes an auxiliary wheel, the air wheel car further includes a fan device, disposed on the body opposite to the driving wheel, the position of the fan device and the position of the auxiliary wheel do not overlap, and the fan device is electrically connected to the computer device.

Furthermore, when the air wheel car of the present invention includes a plurality of auxiliary wheels, the air wheel car further includes a fan device, disposed on the body opposite to the driving wheel, the position of the fan device and the positions of the plurality of auxiliary wheels do not overlap, and the fan device is electrically connected to the computer device.

Furthermore, the air wheel car of the present invention further includes a plurality of fan devices, the fan devices are centered around the driving wheel and are oppositely arranged on the body, and the fan devices are electrically connected to the computer device.

Furthermore, when the air wheel car of the present invention includes an auxiliary wheel, the air wheel car further includes a plurality of fan devices, which are centered around the driving wheel and are oppositely arranged on the body, and the positions of the fan devices do not overlap with the position of the auxiliary wheel, and the fan devices are electrically connected to the computer device.

Furthermore, when the air wheel car of the present invention includes a plurality of auxiliary wheels, the air wheel car further includes a plurality of fan devices, the fan devices are centered around the driving wheel and are oppositely arranged on the body, and the positions of the fan devices do not overlap with the position of the auxiliary wheels, wherein the fan devices are electrically connected to the computer device.

As seen from the above, the present invention provides an air wheel car that allows the wheels to rotate and move laterally at the same time. The air wheel car of the present invention can move, turn and move laterally by only one driving wheel, or is equipped with auxiliary wheels and/or fan devices for more flexible movement, steering and lateral movement to adapt to various terrains.

### BRIEF DESCRIPTION OF THE DRAWINGS

The present invention will be apparent to those skilled in the art by reading the following detailed description of a preferred embodiment thereof, with reference to the attached drawings, in which:
FIG. 1A is a schematic top structural view of an air wheel car according to an embodiment of the present invention.
FIG. 1B is a schematic side view of the air wheel car according to an embodiment of the present invention.
FIG. 2A is a schematic structural diagram of a top view after rotating the wheel of the air wheel car according to an embodiment of the present invention.
FIG. 2B is a schematic side view of the tire structure after rotating the wheel of the air wheel car according to an embodiment of the present invention.
FIG. 3A is a schematic top structural view of an air wheel car according to another embodiment of the present invention.
FIG. 3B is a schematic side view of the air wheel car according to another embodiment of the present invention.
FIG. 3C is a schematic top view of the auxiliary wheel according to another embodiment of the present invention.
FIG. 4A is a schematic top structural view of an air wheel car according to yet another embodiment of the present invention.
FIG. 4B is a schematic side view of the air wheel car according to yet another embodiment of the present invention.
FIG. 5A is a schematic top structural view of an air wheel according to yet another embodiment of the present invention.
FIG. 5B is a schematic side view of the air wheel car according to another embodiment of the present invention.
FIG. 6A is a schematic top structural view of an air wheel car according to yet another embodiment of the present invention.
FIG. 6B is a schematic top structural view of the air wheel car according to yet another embodiment of the present invention.
FIG. 7A is a schematic top structural view of an air wheel car according to yet another embodiment of the present invention.
FIG. 7B is a schematic top structural view of the air wheel car according to yet another embodiment of the present invention.
FIG. 7C is a schematic top view of the air wheel car according to another embodiment of the present invention.

### DETAILED DESCRIPTION OF THE PREFERRED EMBODIMENT

The accompanying drawings are included to provide a further understanding of the invention, and are incorporated in and constitute a part of this specification. The drawings illustrate embodiments of the invention and, together with the description, serve to explain the principles of the invention.

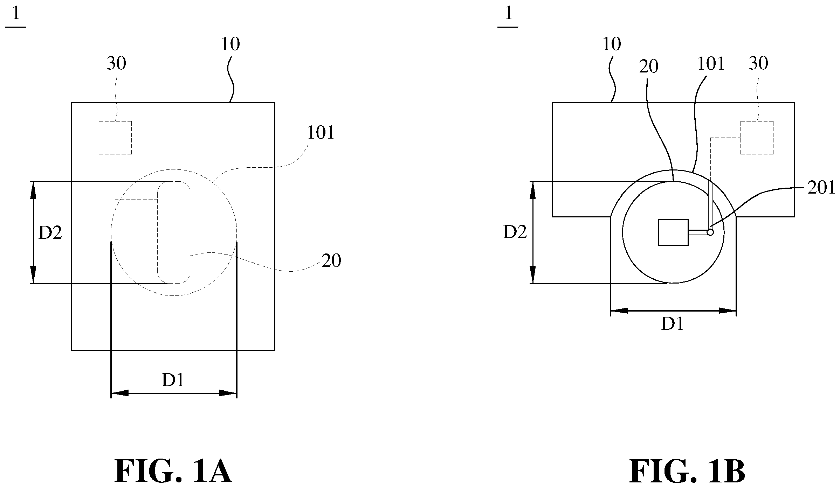

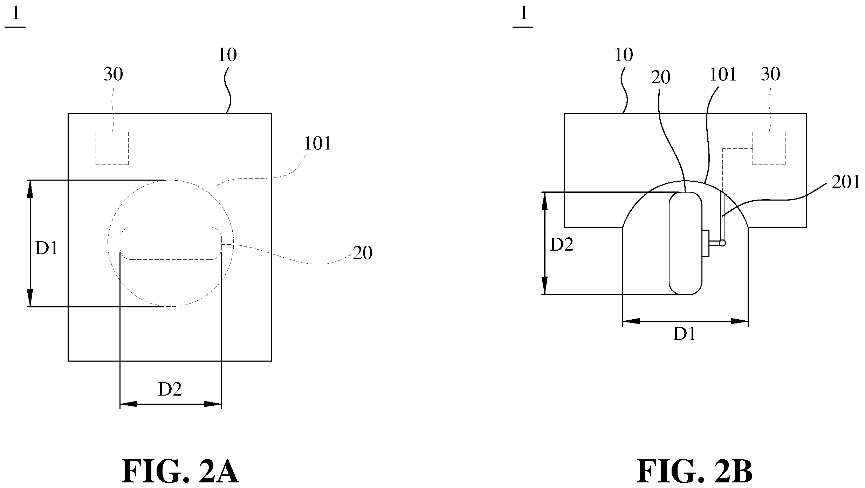

FIG. 1A is a schematic top structural view of an air wheel car according to an embodiment of the present invention; FIG. 1B is a schematic side view of the air wheel car according to an embodiment of the present invention; FIG. 2A is a schematic structural diagram of a top view after rotating the wheel of the air wheel car according to an embodiment of the present invention; and, FIG. 2B is a schematic side view of the tire structure after rotating the wheel of the air wheel car according to an embodiment of the present invention. Refer to FIGS. 1A, 1B, 2A, and 2B. In one embodiment of the present invention, the air wheel car 1 includes a body 10, at least one driving wheel, 20 and a computer device 30. The bottom of the body 10 includes an accommodation space 101. The driving wheel 20 is pivotally connected to the body 10 through a control shaft 201 and is disposed in the accommodation space 101. The diameter D1 of the accommodation space 101 is larger than the diameter D2 of the driving wheel 20 to provide a rotation space for the driving wheel 20. The computer device 30 is disposed inside the body 10, and the computer device 30 is electrically connected to the control shaft 201 and the driving wheel 20. The computer device 30 controls the driving wheel 20 to turn 1-90 degrees through the control shaft 201, such as turning right 90 degrees or turning left 90 degrees. In addition, in one embodiment of the present invention, the control shaft 201 is also pivotally connected to the body 10, which facilitates the rotation of the control shaft 201 and drives the driving wheel 20 to rotate. In other embodiments of the present invention, a track (not shown in the figures) is provided at the bottom of the body 10, such as a hollow track or a solid track. The control shaft 201 can move on the track and drive the driving wheel 20 to rotate.

Specifically, when the air wheel car 1 is traveling along a straight line, the driving wheel 20 can maintain the direction as shown in FIG. 1A. When the air wheel car 1 is to move in the lateral direction, the car can be rotated under the control of the computer device 30. The driving wheel 20 can finally be turned as shown in FIG. 2A. As such, the air wheel car can move laterally and facilitate roadside parking. Furthermore, in this embodiment, the air wheel car 1 only includes one driving wheel 20. Therefore, the driving wheel 20 can be disposed at the center of the bottom of the body 10, and the overall center of gravity of the air wheel car 1 can be adjusted to maintain the balance of the single-wheeled air wheel car 1. Furthermore, in other embodiments, a plurality of driving wheels 20 can be provided. In addition, a sufficiently large driving wheel 20 can also be used to maintain the balance of the single-wheeled air wheel 1.

On the other hand, because the driving wheel 20 is pivotally connected to the body 10 through the control shaft 201, the control shaft 201 can be directly controlled by the computer device 30 for steering in order to further drive the driving wheel 20 to perform steering even if the driving wheel 20 is in contact with the ground. Furthermore, in other embodiments of the present invention, a motor device (not shown in the figures) can be further provided between the computer device 30 and the control shaft 201, so that the computer device 30 can rotate the control shaft 201 through the motor device to further enhance the power of rotation.

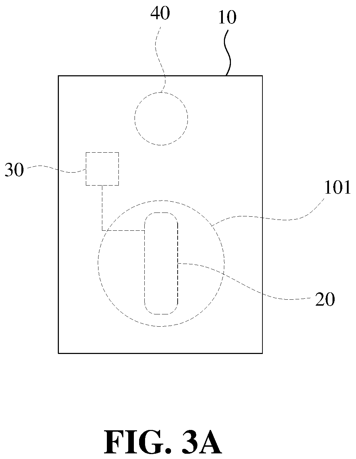

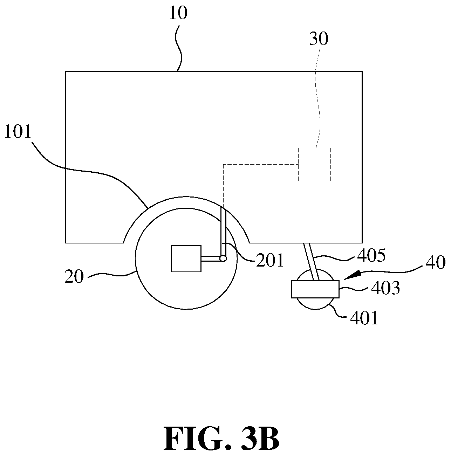

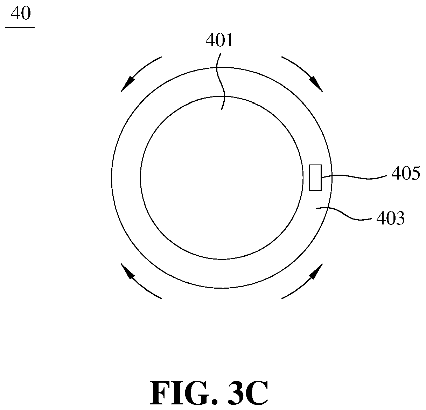

FIG. 3A is a schematic top structural view of an air wheel car according to another embodiment of the present invention; FIG. 3B is a schematic side view of the air wheel car according to another embodiment of the present invention; and, FIG. 3C is a schematic top view of the auxiliary wheel according to another embodiment of the present invention. Refer to FIGS. 3A, 3B, and 3C.

In another embodiment of the present invention, the air wheel car further includes an auxiliary wheel 40. The auxiliary wheel 40 includes a ball wheel 401 and a bearing 403. The ball wheel 401 is in the shape of a ball and is coupled in the bearing 403. The bearing 403 is connected to the bottom of the body 10 through a connecting shaft 405. The bearing 403 can limit the ball wheel 401 in the bearing 403 and allow the ball wheel 401 to roll freely, and the auxiliary wheel 40 is arranged at the bottom of the body 10 opposite to the driving wheel 20. In addition, the number of the connecting shaft 405 can be more than one, and the connecting shaft 405 can be connected to any position of the bearing 403 as long as the bearing 403 can remain stable and firmly connected to the body 10. The advantage of disposing the auxiliary wheel 40 is that the body 10 including only one driving wheel 20 can be balanced in the simplest way, and because the ball wheel 401 of the auxiliary wheel 40 is integrated in the bearing 403, the ball wheel 401 can perform 360 degrees of free rotation without restriction, as shown in FIG. 3C. Therefore, no matter what angle the driving wheel 20 rotates and in which direction it moves, the ball wheel 401 can rotate accordingly.

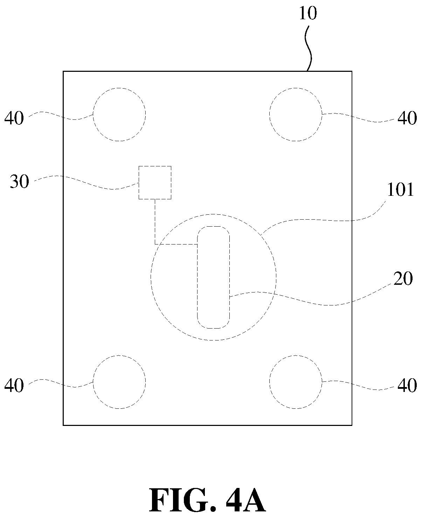

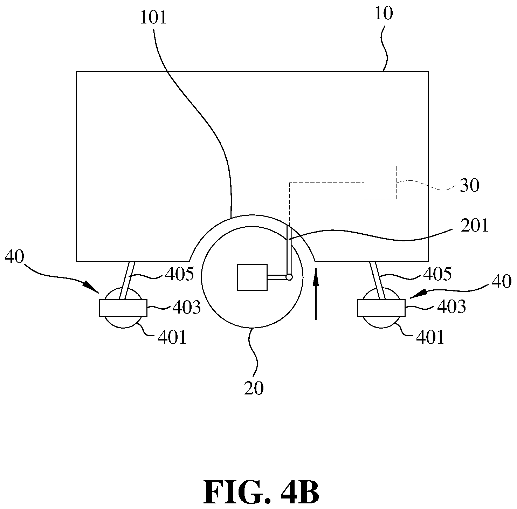

FIG. 4A is a schematic top structural view of an air wheel car according to yet another embodiment of the present invention; and, FIG. 4B is a schematic side view of the air wheel car according to yet another embodiment of the present invention. Refer to FIGS 4A and 4B. In another embodiment of the present invention, the air wheel car further includes a plurality of auxiliary wheels 40. Each auxiliary wheel 40 includes a ball wheel 401 and a bearing 403. The ball wheel 401 is coupled to the bearing 403, the bearing 403 is connected to the bottom of the body 10 through a connecting shaft 405, and the auxiliary wheel 40 is centered around the driving wheel 20 and are arranged oppositely. Specifically, in this embodiment, the air wheel car is configured like a general vehicle structure, with four auxiliary wheels 40 respectively disposed at the four corners of the bottom of the body 10 to facilitate the running and lateral movement of the air wheel car. In addition, in other embodiments of the present invention, the number of auxiliary wheels 40 can be adjusted according to actual needs, such as two, three, four or more.

On the other hand, the air wheel car including a plurality of auxiliary wheels 40 has other advantages. As shown in FIG. 4B, when the driving wheel 20 is to rotate, the body 10 can be supported on the ground by the auxiliary wheels 40, then the computer device 30 can control the control shaft 201 to rise, so as to drive the driving wheel 20 to rise and hang in the air. When the driving wheel 20 is suspended in the air, the computer device 30 can control the control shaft 201 to rotate. Such an operation method allows the driving wheel 20 to avoid contact with the ground when rotating to reduce the energy required for the rotation of the driving wheel 20. It should be understood that in other embodiments, the control shaft 201 can be selectively electrically connected to a lifting mechanism (not shown in the figures) to facilitate the computer device 30 to control the control shaft 201 to rise.

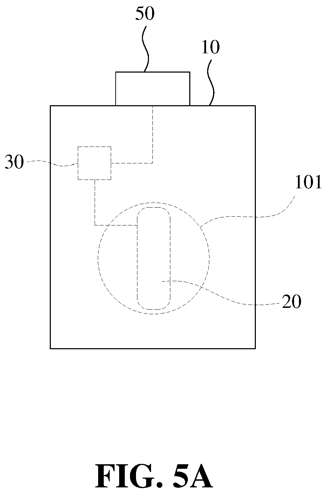

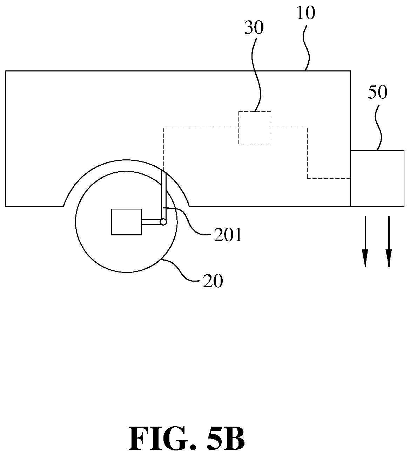

FIG. 5A is a schematic top structural view of an air wheel according to yet another embodiment of the present invention; and, FIG. 5B is a schematic side view of the air wheel car according to another embodiment of the present invention. Refer to FIGS. 5A and 5B. In yet another embodiment of the present invention, the air wheel car further includes a fan device 50. The fan device 50 is disposed on the body 10 opposite to the driving wheel 20, and the fan device 50 is electrically connected to the computer device 30. In this embodiment, the air wheel car including only one driving wheel 20 can further maintain balance and provide auxiliary steering force through a fan device 50. The fan device 50 can be, for example, a propeller or other rotating device that can provide airflow. In addition, although FIGS. 5A and 5B show that the fan device 50 is disposed outside the body 10, the fan device 50 can also be fitted into the body 10.

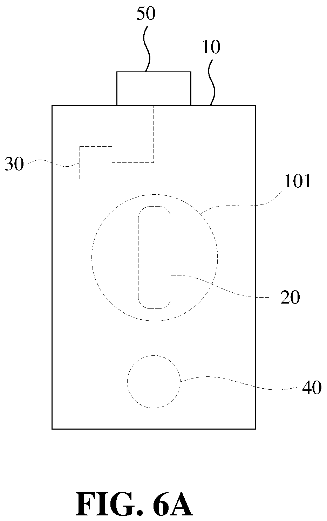

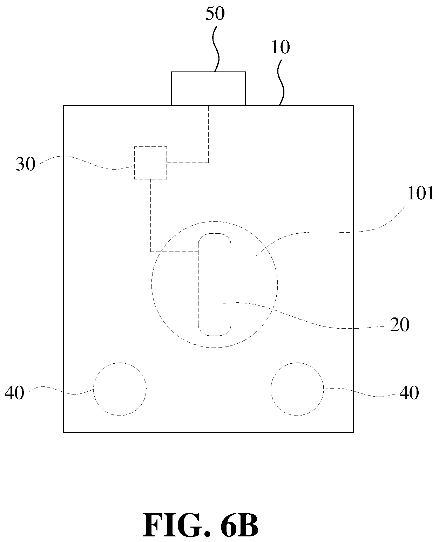

FIG. 6A is a schematic top structural view of an air wheel car according to yet another embodiment of the present invention; and, FIG. 6B is a schematic top structural view of the air wheel car according to yet another embodiment of the present invention. Refer to FIGS. 6A and 6B. In yet another embodiment of the present invention, the air wheel car may include both a fan device 50 and an auxiliary wheel 40. For example, in the embodiment shown in FIG. 6A, the air wheel car may include an auxiliary wheel 40 and a fan device 50. The fan device 50 and the driving wheel 20 may be disposed opposite to each other on the body 10, and the position of the fan device 50 does not overlap with the position of the auxiliary wheels 40, where the fan device 50 is electrically connected to the computer device 30. Alternatively, in the embodiment shown in FIG. 6B, the air wheel car may include a plurality of auxiliary wheels 40 and one fan device 50. The fan device 50 and the driving wheel 20 can be disposed opposite to one another on the body 10, and the position of the fan device 50 does not overlap with the positions of the auxiliary wheels 40. The fan device 50 is electrically connected to the computer device 30. In this embodiment, a fan device 50 can be used to operate with different numbers of auxiliary wheels 40 to allow the body 10 to move more flexibly.

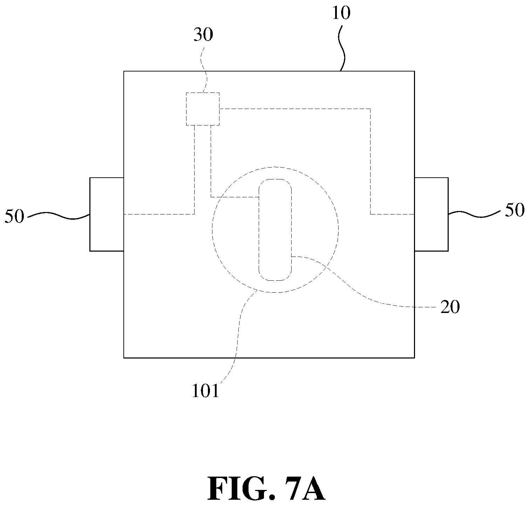

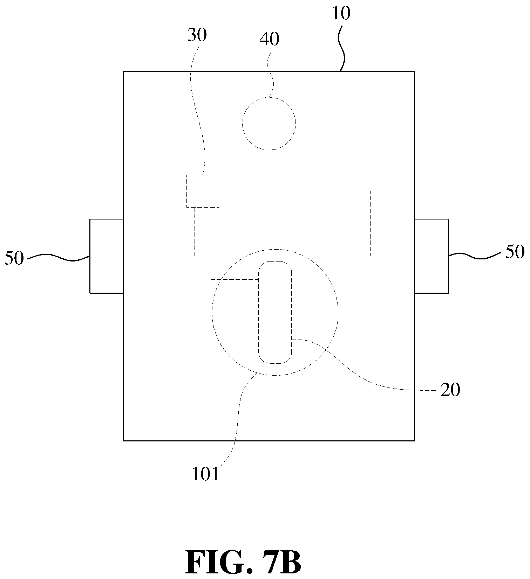

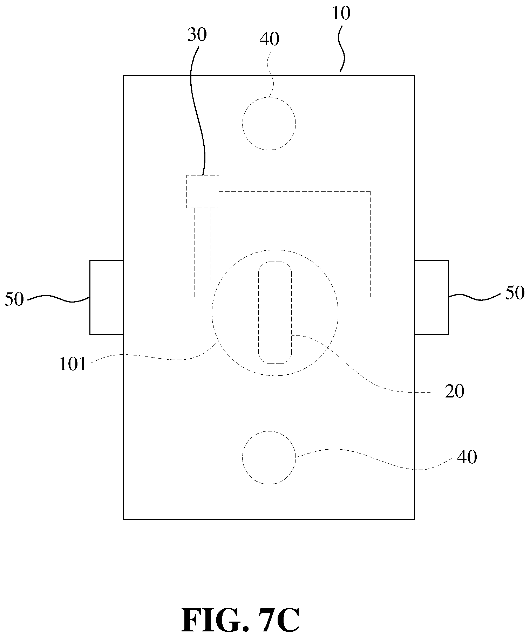

FIG. 7A is a schematic top structural view of an air wheel car according to yet another embodiment of the present invention; FIG. 7B is a schematic top structural view of the air wheel car according to yet another embodiment of the present invention; and, FIG. 7C is a schematic top view of the air wheel car according to another embodiment of the present invention. Refer to FIGS. 7A, 7B, and 7C. In yet another embodiment of the present invention, the air wheel car may include a plurality of fan devices 50 as well as auxiliary wheels 40. For example, in the embodiment shown in FIG. 7A, the air wheel car may include a plurality of fan devices 50, the fan devices 50 are centered around the driving wheel 20 and are oppositely disposed on the body 10, and the fan devices 50 are electrically connected to the computer device 30. In the embodiment of FIG. 7A, a fan device 50 is used to replace the auxiliary wheels 40, and the movement of the body 10 is assisted by air flow. It should be understood that although FIG. 7A shows the fan device 50 being disposed on the left and right sides of the body 10, the fan device 50 can also be disposed on the front side and the rear side of the body 10 respectively according to needs.

In the embodiment shown in FIG. 7B, the air wheel car includes an auxiliary wheel 40 and a plurality of fan devices 50. The auxiliary wheel 40 and the driving wheel 20 are arranged opposite to each other on the body 10. The fan devices 50 are centered around the driving wheel 20 and oppositely disposed on the body 10. The positions of the fan devices 50 do not overlap with the position of the auxiliary wheel 40. The fan devices 50 are electrically connected to the computer device 30. In the embodiment shown in FIG. 7C, the air wheel car includes a plurality of auxiliary wheels 40 and a plurality of fan devices 50. The auxiliary wheels 40 are centered on the driving wheel 20 and are oppositely arranged on the body 10. The fan devices 50 are centered on the driving wheel 20 and oppositely arranged on the body 10, and the positions of the fan devices 50 do not overlap with the positions of the auxiliary wheels 40. The fan devices 50 are electrically connected to the computer device 30. In this embodiment, the plurality of fan devices 50 can be simply used to cooperate with one driving wheel 20, or a plurality of fan devices 50 can be used to cooperate with a different number of auxiliary wheels 40, so that the body 10 can be more flexibly operated. It should be understood that although the auxiliary wheels 40 are disposed on the front and rear sides of the body 10 and the fan device 50 is disposed on the left and right sides of the body 10 in FIGS. 7B and 7C, the positions of the auxiliary wheels 40 and the fan devices 50 can also be exchanged as required.

As seen from the above embodiments of the present invention, the present invention provides an air wheel car that allows the tires to rotate and move laterally. The air wheel car of the present invention can move, turn and move laterally by only one driving wheel, it can also be used with auxiliary wheels and/or fan devices for more flexible movement, steering and lateral movement to adapt to various terrains. When parking the air wheel car on the roadside, the air wheel car can move laterally and park by rotating the driving wheels. The structure of the air wheel car of the present invention can be applied to various types of vehicles, and is especially suitable for small vehicles.

Although the present invention has been described with reference to the preferred embodiments thereof, it is apparent to those skilled in the art that a variety of modifications and changes may be made without departing from the scope of the present invention which is intended to be defined by the appended claims.

## Claims

1. An air wheel car, comprising:
a body, with a bottom having an accommodation space;
at least one driving wheel, disposed in the accommodation space and pivotally connected to the body through a control shaft, and the accommodation space having a diameter greater than a diameter of at least one driving wheels; and
a computer device, disposed inside the body, and electrically connected to the control shaft and at least one driving wheels;
wherein the computer device controls at least one driving wheels to perform 1-90 degree steering through the control shaft.

2. The air wheel car according to claim 1, further comprising an auxiliary wheel, the auxiliary wheel comprising a ball wheel and a bearing, the ball wheel being coupled in the bearing, the bearing being connected to the bottom of the body through a connecting shaft, and the auxiliary wheel being arranged opposite to the driving wheel.

3. The air wheel car according to claim 1, further comprising a plurality of auxiliary wheels, each of the auxiliary wheels comprising a ball wheel and a bearing, the ball wheel being coupled in the bearing, the bearing being connected to the bottom of the body through a connecting shaft, and the auxiliary wheels being centered around the driving wheel and arranged opposite to one another.

4. The air wheel car according to claim 3, wherein the number of the auxiliary wheels is four, and the four auxiliary wheels are respectively arranged at the four corners of the bottom of the body.

5. The air wheel car according to claim 1, further comprising a fan device, disposed on the body opposite to the driving wheel and electrically connected to the computer device.

6. The air wheel car according to claim 2, further comprising a fan device, disposed on the body opposite to the driving wheel, the position of the fan device and the position of the auxiliary wheel not overlapping, and the fan device being electrically connected to the computer device.

7. The air wheel car according to claim 3, further comprising a fan device, disposed on the body opposite to the driving wheel, the position of the fan device and the position of the auxiliary wheel not overlapping, and the fan device being electrically connected to the computer device.

8. The air wheel car according to claim 1, further comprising a plurality of fan devices, the fan devices being centered around the driving wheel and oppositely arranged on the body, and the fan devices being electrically connected to the computer device.

9. The air wheel car according to claim 2, further comprising a plurality of fan devices, centered around the driving wheel and oppositely arranged on the body, and the positions of the fan devices not overlapping with the position of the auxiliary wheel, and the fan devices being electrically connected to the computer device.

10. The air wheel car according to claim 3, wherein further comprising a plurality of fan devices, centered around the driving wheel and oppositely arranged on the body, and the positions of the fan devices not overlapping with the position of the auxiliary wheel, and the fan devices being electrically connected to the computer device.
